# EUROPÄISCHE PATENTANMELDUNG

(11) **EP 4 831 571 A1**
(43) Veröffentlichungstag der Anmeldung: **28.10.2026**
(21) Anmeldenummer: 25172411.8
(22) Anmeldetag: 24.04.2025
(51) Int. Cl.: F27B 17/02, A61C 13/20, F27D 19/00, F27D 21/00

(54) **VERFAHREN ZUM STEUERN EINES OFENS BEIM VORTROCKNEN WENIGSTENS EINER DENTALRESTAURATION, VORRICHTUNG ZUR DATENVERARBEITUNG, COMPUTERPROGRAMM, COMPUTERLESBARES MEDIUM, OFEN, VERFAHREN ZUM VORTROCKNEN WENIGSTENS EINER DENTALRESTAURATION UND VERWENDUNG**

(71) Anmelder: Ivoclar Vivadent AG, 9494 Schaan (LI)
(72) Erfinder: BECK, Gregor, 9494 Schaan (LI); JUSSEL, Rudolf, 6800 Gisingen (AT)
(74) Vertreter: Maiwald GmbH

(57) **Zusammenfassung**

Es wird ein Verfahren zum Steuern eines Ofens (10) beim Vortrocknen wenigstens einer Dentalrestauration (12) beschrieben. Der Ofen (10) umfasst eine Ofenbasis (16) zum Lagern der Dentalrestauration (12) und einen Ofenkopf (18), welcher wenigstens ein Heizelement (20) trägt. Das Verfahren umfasst das Erhalten von ersten Daten (D1), die eine aktuelle Ofentemperatur und/oder eine Dynamik der aktuellen Ofentemperatur beschreiben. Außerdem wird im Zuge des Verfahrens eine Schließposition (P) für den Ofen mittels eines Datenmodells (38) basierend auf den ersten Daten (D1) ermittelt. Zudem wird eine Bewegung des Ofenkopfes (18) und/oder der Ofenbasis (16) in die ermittelte Schließposition (P) veranlasst. Auch werden eine Vorrichtung (26) zur Datenverarbeitung, ein Computerprogramm (34) und ein computerlesbares Medium (32) vorgestellt. Ferner werden ein Ofen (10), ein Verfahren zum Vortrocknen wenigstens einer Dentalrestauration (12) sowie eine Verwendung von Daten, die eine aktuelle Ofentemperatur und/oder eine Dynamik der aktuellen Ofentemperatur beschreiben, präsentiert.

## Beschreibung

Die Erfindung betrifft ein Verfahren zum Steuern eines Ofens beim Vortrocknen wenigstens einer Dentalrestauration.

Darüber hinaus ist die Erfindung auf eine Vorrichtung zur Datenverarbeitung, ein Computerprogramm und ein computerlesbares Medium gerichtet.

Ebenso betrifft die Erfindung einen Ofen zur thermischen Bearbeitung wenigstens einer Dentalrestauration.

Zudem ist die Erfindung auf ein Verfahren zum Vortrocknen wenigstens einer Dentalrestauration mittels eines Ofens gerichtet.

Außerdem ist die Erfindung auf eine Verwendung von Daten gerichtet, die eine aktuelle Ofentemperatur und/oder eine Dynamik der aktuellen Ofentemperatur beschreiben.

Dentalrestaurationen werden häufig aus Keramikwerkstoffen hergestellt. Dabei muss die Dentalrestauration im Zuge ihrer Herstellung in einem Ofen gebrannt werden. Das bedeutet, dass unter Einfluss von Wärme eine chemische Reaktion des Keramikwerkstoffs und/oder ein Umbau der Kristallstruktur hervorgerufen wird, die bzw. der mit sich bringt, dass die Dentalrestauration ihr Profil an Stoffeigenschaften, z. B. Härte, in gewünschter Weise verändert. Auch ist es möglich, Dentalrestaurationen pulvermetallurgisch herzustellen, z. B. mittels Sintern. In diesem Fall wird unter Wärmeeinwirkung aus einem sogenannten Grünkörper, der aus gepresstem Pulver hergestellt ist, ein festes Werkstück, d. h. eine feste Dentalrestauration, erzeugt.

In beiden Fällen kann es nötig sein, die Dentalrestauration vor dem Brennen oder Sintern vorzutrocknen. Dies kann dem Verdampfen von Flüssigkeiten oder, allgemeiner, Feuchtigkeit dienen, die bei den nachfolgenden Arbeitsschritten stören würde. Auch können durch das Vortrocknen organische Binder aus dem Werkstück entfernt werden. Dabei unterscheidet man passives Vortrocknen und aktives Vortrocknen, die sich dadurch unterscheiden, dass beim aktiven Vortrocknen dem zu trocknenden Werkstück aktiv Wärme zugeführt wird und beim passiven Vortrocknen nicht. Beide Varianten des Vortrocknens können dabei in einem Ofen, z. B. dem für das Brennen oder Sintern verwendeten Ofen, stattfinden, wobei dieser beim passiven Vortrocknen nicht aktiv betrieben wird. In einem Spezialfall des passiven Vortrocknens kann jedoch Restwärme des Ofens zum Vortrocknen genutzt werden. Aufgrund der Tatsache, dass beim aktiven Vortrocknen dem Werkstück aktiv Wärme zugeführt wird, lässt sich allgemein beim aktiven Vortrocknen ein Energieeintrag ins Werkstück besser kontrollieren als beim passiven Vortrocknen. Ebenfalls wird für aktives Vortrocknen in der Regel weniger Zeit benötigt. Ein Nachteil des aktiven Vortrocknens gegenüber dem passiven Vortrocknen ist, dass zum zuverlässigen und effizienten Vortrocknen ein Anwender hierfür geeignete Parameter einstellen muss. Hierfür sind Fachkenntnisse und Erfahrungen nötig.

Die Aufgabe der vorliegenden Erfindung besteht darin, dass aktive Vortrocknen weiter zu vereinfachen.

Die Aufgabe wird durch ein Verfahren zum Steuern eines Ofens beim Vortrocknen wenigstens einer Dentalrestauration gelöst. Der Ofen umfasst eine Ofenbasis zum Lagern der Dentalrestauration und einen Ofenkopf, welcher wenigstens ein Heizelement trägt. Das Verfahren umfasst:
- Erhalten von ersten Daten, die eine aktuelle Ofentemperatur und/oder eine Dynamik der aktuellen Ofentemperatur beschreiben,
- Ermitteln einer Schließposition für den Ofen mittels eines Datenmodells basierend auf den ersten Daten, und
- Veranlassen einer Bewegung des Ofenkopfes und/oder der Ofenbasis in die ermittelte Schließposition.

Unter Nutzung des Datenmodells kann also basierend auf den ersten Daten, d. h. basierend auf einer aktuellen Ofentemperatur und/oder einer Dynamik der aktuellen Ofentemperatur, eine Schließposition für den Ofen ermittelt werden, die für das Vortrocknen geeignet ist. Dabei sind sowohl die aktuelle Ofentemperatur als auch die Dynamik der aktuellen Ofentemperatur, d.h. z. B. eine Änderungsrate einer aktuellen Ofentemperatur, Kennwerte, die eine im Ofen gespeicherte Wärmeenergie aus einem Vorprozess beschreiben. Unter einer Schließposition des Ofens wird ferner eine Relativposition zwischen Ofenbasis und Ofenkopf verstanden. In diesem Zusammenhang werden neben einer vollständigen Öffnung des Ofens, d. h. einer Konfiguration, in der die Ofenbasis und der Ofenkopf maximal voneinander entfernt sind, und einem vollständigen Geschlossensein des Ofens, d. h. einer Konfiguration, in der der Ofen vollständig geschlossen ist, auch zwischen diesen Extremen liegende Relativpositionen von Ofenbasis und Ofenkopf als Schließpositionen verstanden. In diesem Zusammenhang kann die Ofenbasis feststehend ausgeführt sein, wobei sich der Ofenkopf relativ zur feststehenden Ofenbasis bewegen lässt. Alternativ kann der Ofenkopf feststehend ausgeführt sein, wobei sich die Ofenbasis relativ zum feststehenden Ofenkopf bewegen lässt. Ebenfalls ist es möglich, dass sowohl die Ofenbasis als auch der Ofenkopf beweglich sind. Eine Schließposition kann beispielsweise als Prozentwert angegeben werden, wobei 100 % einer vollständigen Öffnung des Ofens entsprechen können und 0 % dem vollständig geschlossenen Zustand entspricht. Umgekehrt ist es auch möglich, dass 0 % der vollständigen Öffnung des Ofens entspricht und 100 % dem vollständig geschlossenen Zustand. Alternativ ist es möglich, eine Schließposition durch eine Distanz zwischen Ofenbasis und Ofenkopf zu beschreiben. Insgesamt lässt sich so die Dentalrestauration vergleichsweise einfach und zuverlässig vortrocknen. Indem eine aktuelle Temperatur des Ofens und/oder eine Dynamik der aktuellen Ofentemperatur berücksichtigt wird, wird auch die zeitliche Effizienz beim Vortrocknen erhöht. Das liegt daran, dass es auf diese Weise möglich ist, das Vortrocknen bei der aktuellen Temperatur des Ofens zu starten, also Aufheizvorgänge und Abkühlvorgänge nicht nötig sind. Dadurch kann die Prozesszykluszeit reduziert werden, d. h. Folgebrände oder Folgesinterungen können in zeitlich kürzeren Abständen gestartet werden.

Das erfindungsgemäße Verfahren ist also insbesondere vorteilhaft gegenüber bekannten Verfahren zum Steuern von Öfen beim Vortrocknen von Dentalrestaurationen. Bei derartigen Verfahren ist es häufig nötig, eine Mehrzahl an Paaren aus Temperaturen und Haltezeiten einzugeben, um die Dentalrestauration in gewünschter Art und Weise vorzutrocknen.

Ein erfindungsgemäßes Verfahren kann beispielsweise auf einem Steuergerät eines Ofens ausgeführt werden, der dazu geeignet ist, Dentalrestaurationen vorzutrocknen und anschließend zu brennen oder zu sintern.

Gemäß einer Ausführungsform liegt die aktuelle Ofentemperatur zwischen Raumtemperatur, d. h. ca. 20 °C, und 950 °C. Dabei ist ein Temperaturbereich von ca. 700 °C bis 950 °C typisch für das Brennen von Dentalrestaurationen aus Keramik sowie für das Sintern von Dentalrestaurationen. Je nachdem, wie lange der letzte Brennvorgang oder Sintervorgang zurückliegt, kann die aktuelle Ofentemperatur typischerweise zwischen 200 °C und 600 °C liegen. Für den Fall, dass die aktuelle Ofentemperatur zu gering ist, um die Dentalrestauration vorzutrocknen, kann optional der Ofen auf diejenige Temperatur geheizt werden, die bei der kleinstmöglichen Öffnung zum Vortrocknen geeignet ist. Somit kann auch ein zuverlässiges und effizientes Vortrocknen erreicht werden, wenn der Ofen vorher nicht in Betrieb war oder länger nicht auf eine ausreichend hohe Temperatur geheizt wurde.

Gemäß einer Ausführungsform umfasst das Verfahren ferner das Erhalten von zweiten Daten, die eine vordefinierte Aufheizrate für das Vortrocknen beschreiben. Alternativ beschreiben die zweiten Daten eine von einem Nutzer vorgegebene Aufheizrate für das Vortrocknen. Dabei wird in beiden Alternativen die Schließposition für den Ofen mittels des Datenmodells ferner basierend auf den zweiten Daten ermittelt. In der ersten Alternative kann die Aufheizrate für das Vortrocknen fest vorgegeben sein und dabei z. B. auf einer Steuerungseinheit des Ofens gespeichert sein. In dieser Alternative ist es möglich, dass die genaue Aufheizrate für einen Nutzer nicht ersichtlich ist. In diesem Fall würde ein Nutzer lediglich einen Vortrocknungsvorgang anstoßen müssen und alle weiteren Einstellungen des Ofens könnten automatisiert erfolgen. In der zweiten Alternative muss der Nutzer eine Aufheizrate für das Vortrocknen vorgeben. Dabei können dem Nutzer optional verschiedene Aufheizraten in einer Auswahlliste bereitgestellt werden und der Nutzer kann aus dieser Auswahlliste die gewünschte Aufheizrate auswählen. In diesem Zusammenhang kann die Aufheizrate durch einen Zahlenwert beschrieben sein, zum Beispiel in Kelvin pro Zeiteinheit. Alternativ ist es auch möglich, die Aufheizrate mittels Wörtern zu beschreiben, zum Beispiel stark, mittel und schwach oder langsam und schnell. Gemäß einem Beispiel kann die Aufheizrate beim Vortrocknen in Abhängigkeit einer anschließenden Wärmebehandlung der Dentalrestauration, zum Beispiel in Abhängigkeit eines nachfolgenden Brennvorgangs oder eines Sintervorgangs gewählt werden. Somit lässt sich die Aufheizrate gemäß den Vorstellungen des Nutzers einstellen. In beiden Alternativen lässt sich so die Dentalrestauration vergleichsweise einfach und zuverlässig vortrocknen.

Gemäß einer Ausführungsform betragen die vom Nutzer ausgewählten Aufheizraten zwischen 20 K/min und 60 K/min. Es hat sich herausgestellt, dass derartige Aufheizraten gut dafür geeignet sind, Dentalrestaurationen zuverlässig und effizient vorzutrocknen.

Das Verfahren kann ferner umfassen: Veranlassen, dass die Ofentemperatur auf der aktuellen Ofentemperatur oder auf einer mittels der aktuellen Ofentemperatur errechneten Temperatur gehalten wird. In einem Fall, in dem die Ofentemperatur geregelt wird, kann also die Ofentemperatur auf die aktuelle Ofentemperatur oder die mittels der aktuellen Ofentemperatur errechnete Temperatur geregelt werden. D. h., dass die aktuelle Ofentemperatur oder eine mittels dieser errechnete Temperatur als Sollwert dieser Regelung verwendet wird. Die Schließposition wird, wie bereits erläutert, basierend auf dem Datenmodell eingestellt. Das hat den Vorteil, dass der Ofen zum Start des Vortrocknens weder aufgeheizt noch abgekühlt werden muss. Das Vortrocknen kann also vergleichsweise schnell starten, unabhängig von einer aktuellen Ofentemperatur. Dies kann zu vergleichsweise kurzen Prozesszykluszeiten führen. Ferner bewirkt das Regeln des Ofens auf eine konstante Temperatur einen gut kontrollierbaren Vortrocknungsprozess, welcher wiederum zu einer reproduzierbar hohen Qualität der Dentalrestauration führt.

Auch kann das Verfahren ferner umfassen:
- Erhalten von dritten Daten, die eine vom Nutzer vorgegebene Schließzeit beschreiben, und
- Veranlassen eines Schließens des Ofens mit Ablauf der vorgegebenen Schließzeit.

Dabei kann der Ofen sich über einen Zeitraum bis zum Erreichen der Schließzeit sukzessive schließen. Dabei kann das sukzessive Schließen durch eine zeitliche Sequenz an Schließpositionen beschrieben werden. Alternativ ist es möglich, dass sich der Ofen erst bei Erreichen des Endes der Schließzeit vollständig schließt. Typische Schließzeiten betragen dabei zwischen 1 Minute und 60 Minuten. Dies hängt maßgeblich vom verwendeten Materialsystem ab. In beiden Alternativen lässt sich eine zuverlässige Vortrocknung erreichen. Nach dem Schließen kann direkt eine Wärmebehandlung der Dentalrestauration starten.

In einem Fall, in dem der Ofen die ermittelte Schließposition während des Vortrocknens einnimmt und erst bei Erreichen des Endes der Schließzeit vollständig schließt, ergibt sich zunächst ein linearer Anstieg der Temperatur. Mit abnehmender Differenz zwischen der Temperatur der Dentalrestauration und der Ofentemperatur flacht der Temperaturanstieg in der Dentalrestauration zunehmend ab. Falls ein konstanter, insbesondere linearer, Temperaturanstieg in der Dentalrestauration gewünscht ist, muss die Schließposition nachgeregelt werden oder die Ofentemperatur sukzessive erhöht werden. Letzteres gilt auch, wenn ein Nutzer eine bestimmte Aufheizrate vorgegeben hat, die über die Schließzeit gewährleistet sein soll.

Auch in einem Fall, in dem vom Nutzer keine Schließzeit vorgegeben ist, ist es denkbar, die Schließposition dynamisch anzupassen, indem das erfindungsgemäße Verfahren mehrfach ausgeführt wird.

Das Datenmodell kann ein trainiertes Datenmodell sein. Ein solches Datenmodell ist darauf trainiert, eine Schließposition für den Ofen basierend auf ersten Daten, d. h. einer aktuellen Ofentemperatur, und basierend auf zweiten Daten, d. h. einer von einem Nutzer vorgegebenen Aufheizrate für das Vortrocknen oder einer vordefinierten Aufheizrate für das Vortrocknen auszugeben. Hierzu kann das Datenmodell mit Trainingsdaten trainiert werden, welche eine Mehrzahl an Datenpaaren umfassen, wobei jedes Datenpaar einen ersten Wert umfasst, der eine aktuelle Ofentemperatur ist, und einen zweiten Wert umfasst, der eine Aufheizrate ist. Die Trainingsdaten sind dabei mit Daten annotiert, die eine Schließposition beschreiben. Dabei ist die Schließposition so gewählt, dass die im Datenpaar vom zweiten Wert beschriebene Aufheizrate umgesetzt werden kann. Derartige Trainingsdaten können beispielsweise anhand von Versuchen ermittelt werden. Alternativ ist es möglich, die Trainingsdaten mittels einer Simulation zu erzeugen. Auch ist es möglich, sowohl Versuche als auch eine Simulation zu verwenden, um die Trainingsdaten zu erzeugen. Ein Beispiel für ein trainiertes Datenmodell ist ein künstliches neuronales Netz. Durch Nutzung derartiger trainierter Datenmodelle lässt sich einfach und zuverlässig eine Schließposition für den Ofen in Abhängigkeit der ersten Daten und der zweiten Daten ermitteln.

Alternativ oder zusätzlich kann das Datenmodell ein mathematisches Modell sein. In diesem Fall beschreibt das Datenmodell eine Schließposition für den Ofen in Abhängigkeit der ersten Daten und in abhängig der zweiten Daten unter Nutzung formelmäßiger Zusammenhänge. Das Datenmodell kann dabei eine oder mehrere Formeln umfassen, mittels derer sich anhand der ersten Daten und der zweiten Daten die Schließposition ermitteln lässt. Auf diese Weise lässt sich einfach und zuverlässig eine geeignete Schließposition ermitteln.

In einem Beispiel umfasst das mathematische Modell eine Polynom-Funktion. Mittels einer Polynom-Funktion wird dabei ein formelmäßiger Zusammenhang zwischen der Schließposition, den ersten Daten und den zweiten Daten beschrieben. Je nach gewünschter Genauigkeit kann die Polynom-Funktion eine Funktion zweiten Grades, dritten Grades oder noch höheren Grades sein. Es hat sich gezeigt, dass ein Datenmodell, das eine Polynom-Funktion umfasst, einen guten Kompromiss zwischen einer genauen Ermittlung einer geeigneten Schließposition und geringen Anforderungen an Speicherkapazitäten und Rechenleistungen darstellt.

Gemäß einer Variante kann das Datenmodell auf Versuchsergebnissen basieren. Das Datenmodell kann somit ganz oder teilweise mit Versuchsergebnissen abgeglichen werden oder ganz oder teilweise anhand von Versuchsergebnissen generiert sein. Dabei kann das Datenmodell ein trainiertes Datenmodell sein oder ein mathematisches Modell umfassen. In beiden Fällen bewirkt die Nutzung der Versuchsergebnisse, dass das Datenmodell zuverlässig geeignete Schließpositionen ausgibt.

Ebenso wird die Aufgabe durch eine Vorrichtung zur Datenverarbeitung gelöst, die Mittel zur Ausführung des erfindungsgemäßen Verfahrens zum Steuern eines Ofens beim Vortrocknen wenigstens einer Dentalrestauration umfasst. Unter Nutzung einer solchen Vorrichtung zur Datenverarbeitung kann also basierend auf den ersten Daten, d. h. basierend auf einer aktuellen Ofentemperatur, eine Schließposition für den Ofen ermittelt werden, in der die gewünschte Vortrocknung ausgehend von der aktuellen Ofentemperatur und/oder einer Dynamik der aktuellen Ofentemperatur erreicht wird. Insgesamt lässt sich so die Dentalrestauration vergleichsweise einfach und zuverlässig vortrocknen. Indem eine aktuelle Temperatur des Ofens berücksichtigt wird, wird außerdem die zeitliche Effizienz beim Vortrocknen erhöht. Das liegt daran, dass es auf diese Weise möglich ist, das Vortrocknen bei der aktuellen Temperatur des Ofens zu starten, also Aufheizvorgänge und Abkühlvorgänge nicht nötig sind.

Ferner wird die Aufgabe durch ein Computerprogramm gelöst, welches Befehle umfasst, die bei der Ausführung des Computerprogramms durch einen Computer diesen veranlassen, das erfindungsgemäße Verfahren zum Steuern eines Ofens beim Vortrocknen wenigstens einer Dentalrestauration auszuführen. Unter Nutzung eines solchen Computerprogramms kann also basierend auf den ersten Daten, d. h. basierend auf einer aktuellen Ofentemperatur, eine Schließposition für den Ofen ermittelt werden, in der die gewünschte Vortrocknung ausgehend von der aktuellen Ofentemperatur und/oder einer Dynamik der aktuellen Ofentemperatur erreicht wird. Insgesamt lässt sich so die Dentalrestauration vergleichsweise einfach und zuverlässig vortrocknen. Indem eine aktuelle Temperatur des Ofens berücksichtigt wird, wird auch die zeitliche Effizienz beim Vortrocknen erhöht. Das liegt daran, dass es auf diese Weise möglich ist, das Vortrocknen bei der aktuellen Temperatur des Ofens zu starten, also Aufheizvorgänge und Abkühlvorgänge nicht nötig sind.

Darüber hinaus wird die Aufgabe durch ein computerlesbares Medium gelöst, welches Befehle umfasst, die bei der Ausführung durch einen Computer diesen veranlassen, das erfindungsgemäße Verfahren zum Steuern eines Ofens beim Vortrocknen wenigstens einer Dentalrestauration auszuführen. Unter Nutzung eines solchen computerlesbaren Mediums kann also basierend auf den ersten Daten, d. h. basierend auf einer aktuellen Ofentemperatur, eine Schließposition für den Ofen ermittelt werden, in der die gewünschte Vortrocknung ausgehend von der aktuellen Ofentemperatur und/oder einer Dynamik der aktuellen Ofentemperatur erreicht wird. Insgesamt lässt sich so die Dentalrestauration vergleichsweise einfach und zuverlässig vortrocknen. Indem eine aktuelle Temperatur des Ofens berücksichtigt wird, wird auch die zeitliche Effizienz beim Vortrocknen erhöht. Das liegt daran, dass es auf diese Weise möglich ist, das Vortrocknen bei der aktuellen Temperatur des Ofens zu starten, also Aufheizvorgänge und Abkühlvorgänge nicht nötig sind.

Außerdem wird die Aufgabe durch einen Ofen zur thermischen Bearbeitung wenigstens einer Dentalrestauration gelöst. Der Ofen umfasst eine Ofenbasis zum Lagern der Dentalrestauration und einem Ofenkopf. Die Ofenbasis und der Ofenkopf sind mittels wenigstens eines Aktors relativ zueinander beweglich. Ferner umfasst der Ofen eine erfindungsgemäße Vorrichtung zur Datenverarbeitung, wobei die Vorrichtung zur Datenverarbeitung steuerungstechnisch mit dem Aktor gekoppelt ist. Dabei wird unter einer Schließposition des Ofens eine Relativposition zwischen Ofenbasis und Ofenkopf verstanden. In diesem Zusammenhang werden neben einer vollständigen Öffnung des Ofens, d. h. einer Konfiguration, in der die Ofenbasis und der Ofenkopf maximal voneinander entfernt sind, und einem vollständigen Geschlossensein des Ofens, d. h. einer Konfiguration, in der der Ofen vollständig geschlossen ist, auch zwischen diesen Extremen liegende Relativpositionen von Ofenbasis und Ofenkopf als Schließpositionen verstanden. In diesem Zusammenhang kann die Ofenbasis feststehend ausgeführt sein, wobei sich der Ofenkopf relativ zur feststehenden Ofenbasis bewegen lässt. Alternativ kann der Ofenkopf feststehend ausgeführt sein, wobei sich die Ofenbasis relativ zum feststehenden Ofenkopf bewegen lässt. Ebenfalls ist es möglich, dass sowohl die Ofenbasis als auch der Ofenkopf beweglich sind. Eine Schließposition kann beispielsweise als Prozentwert angegeben werden, wobei 100 % einer vollständigen Öffnung des Ofens entsprechen können und 0 % dem vollständig geschlossenen Zustand entspricht. Umgekehrt ist es auch möglich, dass 0 % der vollständigen Öffnung des Ofens entspricht und 100 % dem vollständig geschlossenen Zustand. Alternativ ist es möglich, eine Schließposition durch eine Distanz zwischen Ofenbasis und Ofenkopf zu beschreiben. Insgesamt lässt sich so die Dentalrestauration vergleichsweise einfach und zuverlässig vortrocknen. Indem eine aktuelle Temperatur des Ofens berücksichtigt wird, wird auch die zeitliche Effizienz beim Vortrocknen erhöht. Das liegt daran, dass es auf diese Weise möglich ist, das Vortrocknen bei der aktuellen Temperatur des Ofens zu starten, also Aufheizvorgänge und Abkühlvorgänge nicht nötig sind.

Zusätzlich wird die Aufgabe durch ein Verfahren zum Vortrocknen wenigstens einer Dentalrestauration mittels eines Ofens gelöst. Der Ofen umfasst eine Ofenbasis zum Lagern der Dentalrestauration und einen Ofenkopf, welcher wenigstens ein Heizelement trägt. Beim Vortrocknen nimmt der Ofen eine Schließposition ein, die mittels eines erfindungsgemäßen Verfahrens zum Steuern eines Ofens beim Vortrocknen wenigstens einer Dentalrestauration ermittelt ist. Dieses Verfahren zum Vortrocknen ist besonders einfach. Insgesamt lässt sich so die Dentalrestauration vergleichsweise einfach und zuverlässig vortrocknen. Indem eine aktuelle Temperatur des Ofens berücksichtigt wird, wird auch die zeitliche Effizienz beim Vortrocknen erhöht. Das liegt daran, dass es auf diese Weise möglich ist, das Vortrocknen bei der aktuellen Temperatur des Ofens zu starten, also Aufheizvorgänge und Abkühlvorgänge nicht nötig sind. Das ist auch aus Sicht eines Energieverbrauchs von Vorteil. Die vorhandene Energie wird gut genutzt.

Das Verfahren zum Vortrocknen wenigstens einer Dentalrestauration kann ferner umfassen: Halten der Ofentemperatur auf der aktuellen Ofentemperatur oder auf einer mittels der aktuellen Ofentemperatur errechneten Temperatur. In einem Fall, in dem die Ofentemperatur geregelt wird, kann also die Ofentemperatur auf die aktuelle Ofentemperatur geregelt werden. D. h., dass die aktuelle Ofentemperatur als Sollwert dieser Regelung verwendet wird. Die Schließposition wird, wie bereits erläutert, basierend auf dem Datenmodell eingestellt. Das hat den Vorteil, dass der Ofen zum Start des Vortrocknens weder aufgeheizt noch abgekühlt werden muss. Das Vortrocknen kann also vergleichsweise schnell starten, unabhängig von einer aktuellen Ofentemperatur. Dies kann zu vergleichsweise kurzen Prozesszykluszeiten führen. Ferner bewirkt das Regeln des Ofens auf eine konstante Temperatur einen gut kontrollierbaren Vortrocknungsprozess, welcher wiederum zu einer reproduzierbar hohen Qualität der Dentalrestauration führt.

Auch kann das Verfahren zum Vortrocknen wenigstens einer Dentalrestauration ferner umfassen: Schließens des Ofens mit Ablauf einer vorgegebenen Schließzeit. Dabei kann der Ofen sich über einen Zeitraum bis zum Erreichen der Schließzeit sukzessive schließen. Alternativ ist es möglich, dass sich der Ofen erst bei Erreichen des Endes der Schließzeit vollständig schließt. Typische Schließzeiten betragen dabei zwischen 1 Minute und 60 Minuten. Dies hängt maßgeblich vom verwendeten Materialsystem ab. Nach dem Schließen kann direkt eine Wärmebehandlung der Dentalrestauration starten.

Ferner wird die Aufgabe durch eine Verwendung von Daten gelöst, die eine aktuelle Ofentemperatur und/oder eine Dynamik der aktuellen Ofentemperatur beschreiben. Die Verwendung erfolgt zum Bestimmen einer Schließposition eines Ofens beim Vortrocknen einer Dentalrestauration. Auf diese Weise kann eine zeitliche Effizienz beim Vortrocknen erhöht werden. Das liegt daran, dass somit das Vortrocknen bei der aktuellen Temperatur starten kann, also auf Aufheizvorgänge und Abkühlvorgänge verzichtet werden kann.

Es versteht sich, dass Merkmale, Effekte und/oder Vorteile, die im Zusammenhang mit einem aus erfindungsgemäßem Verfahren zum Steuern eines Ofens beim Vortrocknen, erfindungsgemäßer Vorrichtung zur Datenverarbeitung, erfindungsgemäßem Computerprogramm, erfindungsgemäßem computerlesbaren Medium, erfindungsgemäßem Ofen, erfindungsgemäßem Verfahren zum Vortrocknen und erfindungsgemäßer Verwendung erwähnt wurden, auch für die jeweils anderen aus erfindungsgemäßem Verfahren zum Steuern eines Ofens beim Vortrocknen, erfindungsgemäßer Vorrichtung zur Datenverarbeitung, erfindungsgemäßem Computerprogramm, erfindungsgemäßem computerlesbaren Medium, erfindungsgemäßem Ofen, erfindungsgemäßem Verfahren zum Vortrocknen und erfindungsgemäßer Verwendung gelten.

Die Erfindung wird nachstehend anhand verschiedener Ausführungsbeispiele erläutert, die in den beigefügten Zeichnungen gezeigt sind. Es zeigen:
- Figur 1: einen erfindungsgemäßen Ofen, mit einer erfindungsgemäßen Vorrichtung zur Datenverarbeitung, sodass der Ofen mittels eines erfindungsgemäßen Verfahrens zum Steuern eines Ofens beim Vortrocknen gesteuert werden kann und zudem ein erfindungsgemäßes Verfahren zum Vortrocknen ausgeführt werden kann, wobei der Ofen eine erste Schließposition einnimmt,
- Figur 2: den Ofen aus Figur 1, wobei der Ofen eine zweite Schließposition einnimmt,
- Figur 3: den Ofen aus Figuren 1 und 2, wobei der Ofen eine dritte Schließposition einnimmt, und
- Figur 4: schematisch einen mathematischen Zusammenhang zwischen einer aktuellen Ofentemperatur, einer zum Vortrocknen gewählten Aufheizrate und einer Schließposition des Ofens.

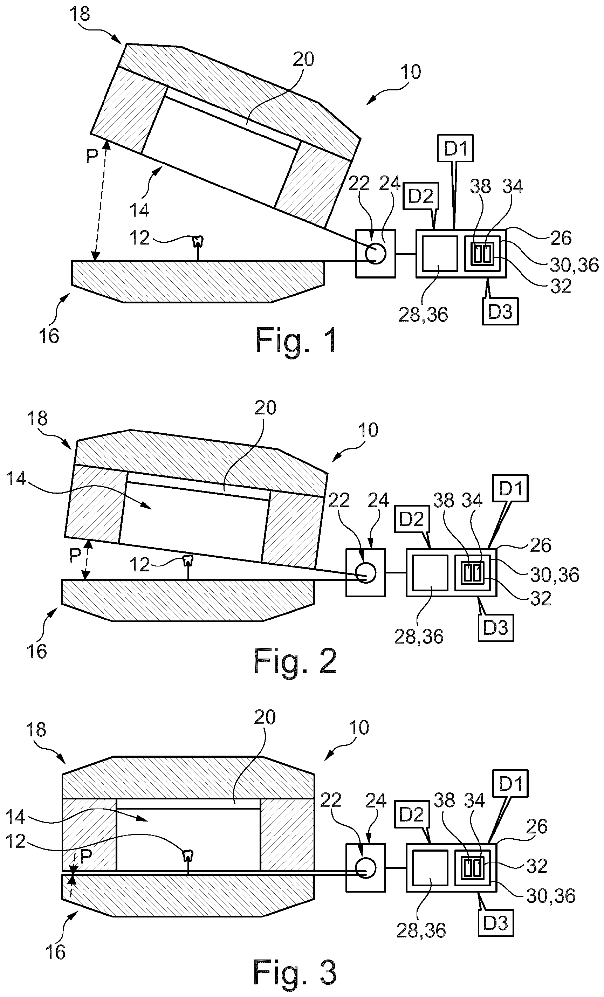

Figur 1 zeigt einen Ofen 10 zur thermischen Bearbeitung wenigstens einer Dentalrestauration 12. In diesem Zusammenhang kann der Ofen 10 beispielsweise als Brennofen für eine Dentalrestauration 12 aus Keramik ausgeführt sein. Alternativ kann der Ofen 10 als Sinterofen für eine pulvermetallurgisch hergestellte Dentalrestauration 12 ausgeführt sein.

In den in den Figuren gezeigten Beispielen ist dabei exemplarisch lediglich eine einzige Dentalrestauration 12 dargestellt. Es versteht sich jedoch, dass es genauso möglich ist, mehrere Dentalrestaurationen 12 zur thermischen Bearbeitung im Inneren des Ofens, d. h. in einer Ofenkammer 14, anzuordnen.

Der Ofen 10 umfasst eine Ofenbasis 16, auf der die Dentalrestauration 12 gelagert ist.

Darüber hinaus weist der Ofen 10 einen Ofenkopf 18 auf, in dem ein lediglich schematisch dargestelltes Heizelement 20 angeordnet ist.

Im dargestellten Ausführungsbeispiel ist die Ofenbasis 16 feststehend.

Der Ofenkopf 18 ist über ein Gelenk 22 drehbar an der Ofenbasis 16 gelagert.

Dabei kann der Ofenkopf 18 mittels eines Aktors 24, der beispielsweise einen Elektromotor umfasst, angetrieben werden. Das bedeutet, dass der Ofenkopf 18 durch Betrieb des Aktors 24 relativ zur Ofenbasis 16 gedreht werden kann.

Somit lässt sich der Ofen 10 mittels des Aktors 24 öffnen und schließen, indem der Ofenkopf 18 entsprechend von der Ofenbasis 16 abgehoben wird oder auf die Ofenbasis 16 aufgesetzt wird.

Dabei kann der Ofenkopf 18 auch Schließpositionen P relativ zur Ofenbasis 16 einnehmen, die zwischen einem vollständigen Verschließen des Ofens 10 und einem vollständigen Öffnen des Ofens 10 liegen.

Dies ist in den Figuren 1, 2 und 3 illustriert, wobei in der Darstellung gemäß Figur 1 der Ofen 10 zu ca. 80 % geöffnet ist, in der Darstellung gemäß Figur 2 zu ca. 40 % geöffnet ist und in der Darstellung gemäß Figur 3 vollständig geschlossen, d. h. zu 0 % geöffnet ist. Die Schließposition P ist dabei in diesen Figuren mittels eines Doppelpfeils illustriert.

Der Ofen 10 weist darüber hinaus eine Vorrichtung 26 zur Datenverarbeitung auf, die steuerungstechnisch mit dem Aktor 24 gekoppelt ist, um einen Betrieb des Aktors 24 zu steuern oder zu regeln.

In diesem Zusammenhang umfasst die Vorrichtung 26 zur Datenverarbeitung eine Recheneinheit 28, die auch als Prozessoreinheit bezeichnet werden kann, und eine Speichereinheit 30.

Die Speichereinheit 30 umfasst ein computerlesbares Medium 32.

Auf dem computerlesbaren Medium 32, d. h. auch auf der Speichereinheit 30, ist ein Computerprogramm 34 hinterlegt.

Das Computerprogramm 34 und damit auch das computerlesbare Medium 32 umfassen Befehle, die bei der Ausführung durch die Recheneinheit 28 oder, allgemeiner gesprochen, einen Computer, diesen veranlassen, ein Verfahren zum Steuern eines Ofens 10 beim Vortrocknen auszuführen.

Die Recheneinheit 28 und die Speichereinheit 30 können somit auch als Mittel 36 zum Ausführen eines Verfahrens zum Steuern eines Ofens 10 beim Vortrocknen bezeichnet werden.

Im Folgenden wird das Verfahren zum Steuern eines Ofens beim Vortrocknen im Detail erläutert.

In einem ersten Schritt des Verfahrens werden erste Daten D1 erhalten, die eine aktuelle Ofentemperatur T beschreiben. Die ersten Daten D1 können beispielsweise von einem nicht näher dargestellten Temperatursensor bereitgestellt werden, der eine Temperatur im Inneren der Ofenkammer 14 misst und über eine steuerungstechnische Verbindung an die Vorrichtung 26 zur Datenverarbeitung weiterleitet.

In einem zweiten Schritt werden zweite Daten D2 erhalten, die eine von einem Nutzer vorgegebene Aufheizrate G für das Vortrocknen beschreiben. In diesem Zusammenhang kann der Nutzer die zweiten Daten D2 über eine Benutzerschnittstelle des Ofens 10 generieren. Über diese Benutzerschnittstelle kann er die Aufheizrate G für das Vortrocknen frei eingeben. Alternativ kann er eine gewünschte Aufheizrate G aus einer Mehrzahl an zur Auswahl gestellten Aufheizraten G auswählen.

Danach, in einem dritten Schritt, wird eine Schließposition P für den Ofen 10 ermittelt. Dies erfolgt basierend auf den ersten Daten D1 und auf den zweiten Daten D2 unter Nutzung eines Datenmodells 38, das neben dem Computerprogramm 34 auf dem computerlesbaren Medium 32 hinterlegt ist. Alternativ kann das Datenmodell 38 auch als Bestandteil des Computerprogramms 34 ausgeführt sein.

In der dargestellten Ausführungsform ist das Datenmodell 38 ein mathematisches Modell in Form einer Polynom-Funktion.

Das Datenmodell 38 hat also beispielsweise die folgende Form, wobei das Formelzeichen T die aktuelle Ofentemperatur bezeichnet, das Formelzeichen G die vorgegebene Aufheizrate bezeichnet und die Buchstaben a, b, c, d, e, f und g Koeffizienten sind: $P = a + bT + {cT}^{2} + dG + {eG}^{2} + fTG + d \frac{T}{G}$

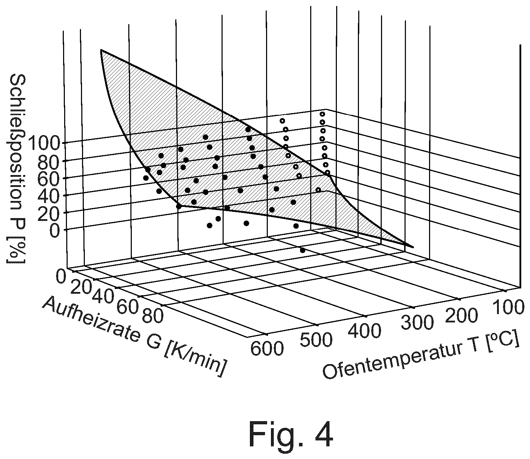

Eine solche Polynom-Funktion kann als Ebene in drei Dimensionen repräsentiert werden (siehe Figur 4).

Dabei basiert vorliegend das Datenmodell 38 auf Versuchsergebnissen. Diese Versuchsergebnisse sind in Figur 4 durch Punkte eingezeichnet. Die Ebene stellt eine auf den Versuchsergebnissen basierende Regressionsebene dar, die sich mittels der oben angegebenen Polynom-Funktion durch Auswahl passender Koeffizienten beschreiben lässt.

Somit lässt sich anhand der Polynom-Funktion in Abhängigkeit der ersten Daten D1 und der zweiten Daten D2 eine Schließposition P ermitteln.

In einem vierten Schritt wird folglich eine Bewegung des Ofenkopfes 18 in die ermittelte Schließposition P veranlasst, d. h. es wird mittels der Vorrichtung 26 zur Datenverarbeitung ein Signal an den Aktor 24 geschickt, der eine Positionierung des Ofenkopfes 18 bewirkt.

Darüber hinaus wird im Zuge des vierten Schrittes die Ofentemperatur auf die aktuelle Ofentemperatur T geregelt, d. h. die Ofentemperatur T wird auf derjenigen Temperatur gehalten, die der Ofen 10 aktuell hat. Dies kann davon abhängig gemacht werden, dass die aktuelle Ofentemperatur T in einem vorgegebenen Bereich, z. B. 200°C bis 600°C, liegt. Für den Fall, dass die aktuelle Ofentemperatur T außerhalb dieses Bereichs liegt, kann diese auf den jeweils nächstliegenden Wert des vorgegebenen Bereichs geregelt werden. Beispielsweise kann in diesem Zusammenhang die Ofentemperatur auf 200°C geregelt werden, sofern die aktuelle Ofentemperatur T unterhalb von 200°C liegt und/oder auf 600°C geregelt werden, sofern die aktuelle Ofentemperatur T oberhalb von 600°C liegt.

Auf diese Weise lässt sich die Dentalrestauration 12 vergleichsweise einfach, insbesondere unter Vorgabe nur eines einzigen Parameters, nämlich der Aufheizrate G mit hoher Zuverlässigkeit vortrocknen.

In diesem Zusammenhang illustrieren die Figuren 1 und 2 zwei mögliche Szenarien.

Im Beispiel aus Figur 1 kann die aktuelle Ofentemperatur T beispielsweise 500 °C betragen und ein Nutzer kann eine Aufheizrate G von 40 K/min angegeben haben. Das bedeutet, dass die zweiten Daten D2 die Aufheizrate G von 40 K/min beschreiben und die ersten Daten D1 die Ofentemperatur T von 500 °C beschreiben.

In diesem Beispiel wurde nun unter Nutzung des Datenmodells 38 eine Schließposition P von 80 % ermittelt und in der in Figur 1 dargestellten Repräsentation des Ofens 10 bereits eingestellt.

Das Vortrocknen findet somit bei einer Schließposition P von 80 % statt, wobei gleichzeitig die Ofentemperatur T auf 500 °C gehalten wird.

Im Beispiel aus Figur 2 kann die aktuelle Ofentemperatur T beispielsweise 300 °C betragen und ein Nutzer kann eine Aufheizrate G von 40 K/min angegeben haben. Das bedeutet, dass die zweiten Daten D2 die Aufheizrate G von 40 K/min beschreiben und die ersten Daten D1 die Ofentemperatur T von 300 °C beschreiben. Das Beispiel aus Figur 2 unterscheidet sich also durch die aktuelle Ofentemperatur T vom Beispiel aus Figur 1.

In diesem Beispiel wurde nun unter Nutzung des Datenmodells 38 eine Schließposition P von 40 % ermittelt und in der in Figur 2 dargestellten Repräsentation des Ofens 10 bereits eingestellt.

Das Vortrocknen findet somit bei einer Schließposition P von 40 % statt, wobei gleichzeitig die Ofentemperatur T auf 300 °C gehalten wird.

Es lässt sich dabei sowohl im Beispiel aus Figur 1 als auch im Beispiel aus Figur 2 derselbe Vortrocknungsprozess realisieren.

Optional können im Zuge des Verfahrens zum Steuern des Ofens beim Vortrocknen auch noch dritte Daten D3 erhalten werden, die eine vom Nutzer vorgegebene Schließzeit beschreiben.

Mit Ablauf dieser Schließzeit wird automatisch ein Schließen des Ofens 10 veranlasst, d. h. mittels der Vorrichtung 26 zur Datenverarbeitung wird ein entsprechendes Steuerungssignal an den Aktor 24 gesendet, der dann den Ofenkopf 18 derart relativ zur Ofenbasis 16 bewegt, dass der Ofen 10 vollständig geschlossen wird.

Auch wenn vorliegend das Verfahren zum Steuern eines Ofens beim Vortrocknen anhand eines Datenmodells 38 erläutert wurde, das als Polynom-Funktion ausgeführt ist, versteht es sich, dass das Datenmodell 38 auch anders gestaltet sein kann.

In einer spezifischen Alternative ist das Datenmodell 38 ein trainiertes Datenmodell, zum Beispiel ein künstliches neuronales Netz. Auch unter Nutzung eines solchen Datenmodells 38 lässt sich basierend auf den ersten Daten D1 und den zweiten Daten D2 eine Schließposition P für den Ofen 10 zuverlässig ermitteln.

Mittels des Ofens 10 lässt sich folglich ein Verfahren zum Vortrocknen wenigstens einer Dentalrestauration 12 ausführen.

Während dieses Verfahrens, d. h. während des Vortrocknens, nimmt der Ofen 10 eine Schließposition P ein, die mittels des zuvor erläuterten Verfahrens zum Steuern des Ofens 10 basierend auf der aktuellen Ofentemperatur T, d. h. den ersten Daten D1, und basierend auf der vorgegebenen Aufheizrate G, d. h. den zweiten Daten D2 ermittelt wurde.

Ferner wird, wie bereits erläutert, die Ofentemperatur auf der aktuellen Ofentemperatur gehalten.

Nach Abschluss des Vortrocknens kann der Ofen 10 vollständig geschlossen werden.

Insgesamt werden vorliegend also Daten, die eine aktuelle Ofentemperatur T beschreiben, zum Bestimmen einer Schließposition P des Ofens 10 beim Vortrocknen einer Dentalrestauration 12 verwendet.

Ebenso werden Daten, die eine gewünschte Aufheizrate G beim Vortrocknen beschreiben, zum Bestimmen einer Schließposition P des Ofens 10 beim Vortrocknen einer Dentalrestauration 12 verwendet.

### Bezugszeichenliste

- 10: Ofen
- 12: Dentalrestauration
- 14: Ofenkammer
- 16: Ofenbasis
- 18: Ofenkopf
- 20: Heizelement
- 22: Gelenk
- 24: Aktor
- 26: Vorrichtung zur Datenverarbeitung
- 28: Recheneinheit
- 30: Speichereinheit
- 32: computerlesbares Medium
- 34: Computerprogramm
- 36: Mittel zum Ausführen eines Verfahrens zum Steuern eines Ofens beim Vortrocknen
- 38: Datenmodell

- D1: erste Daten
- D2: zweite Daten
- D3: dritte Daten
- G: Aufheizrate
- T: Ofentemperatur
- P: Schließposition

## Patentansprüche

1. Verfahren zum Steuern eines Ofens (10) beim Vortrocknen wenigstens einer Dentalrestauration (12), wobei der Ofen (10) eine Ofenbasis (16) zum Lagern der Dentalrestauration (12) und einen Ofenkopf (18) umfasst, welcher wenigstens ein Heizelement (20) trägt, umfassend:
- Erhalten von ersten Daten (D1), die eine aktuelle Ofentemperatur (T) und/oder eine Dynamik der aktuellen Ofentemperatur (T) beschreiben,
- Ermitteln einer Schließposition (P) für den Ofen (10) mittels eines Datenmodells (38) basierend auf den ersten Daten (D1), und
- Veranlassen einer Bewegung des Ofenkopfes (18) und/oder der Ofenbasis (16) in die ermittelte Schließposition (P).

2. Verfahren nach Anspruch 1, ferner umfassend: Erhalten von zweiten Daten (D2), die eine vordefinierte Aufheizrate (G) für das Vortrocknen oder eine von einem Nutzer vorgegebene Aufheizrate (G) für das Vortrocknen beschreiben, wobei die Schließposition (P) für den Ofen (10) mittels des Datenmodells (38) ferner basierend auf den zweiten Daten (D2) ermittelt wird.

3. Verfahren nach Anspruch 1 oder 2, ferner umfassend: Veranlassen, dass die Ofentemperatur auf der aktuellen Ofentemperatur (T) oder auf einer mittels der aktuellen Ofentemperatur (T) errechneten Temperatur gehalten wird.

4. Verfahren nach einem der vorhergehenden Ansprüche, ferner umfassend:
- Erhalten von dritten Daten (D3), die eine vom Nutzer vorgegebene Schließzeit beschreiben, und
- Veranlassen eines Schließens des Ofens (10) mit Ablauf der vorgegebenen Schließzeit.

5. Verfahren nach einem der vorhergehenden Ansprüche, wobei das Datenmodell (38) ein trainiertes Datenmodell ist.

6. Verfahren nach einem der vorhergehenden Ansprüche, wobei das Datenmodell (38) ein mathematisches Modell ist.

7. Verfahren nach Anspruch 6, wobei das mathematische Modell eine Polynom-Funktion umfasst.

8. Verfahren nach einem der vorhergehenden Ansprüche, wobei das Datenmodell (38) auf Versuchsergebnissen basiert.

9. Vorrichtung (26) zur Datenverarbeitung, umfassend Mittel (36) zur Ausführung des Verfahrens nach einem der Ansprüche 1 bis 8.

10. Computerprogramm (34), umfassend Befehle, die bei der Ausführung des Computerprogramms (34) durch einen Computer diesen veranlassen, das Verfahren nach einem der Ansprüche 1 bis 8 auszuführen.

11. Computerlesbares Medium (32), umfassend Befehle, die bei der Ausführung durch einen Computer diesen veranlassen, das Verfahren nach einem der Ansprüche 1 bis 8 auszuführen.

12. Ofen (10) zur thermischen Bearbeitung wenigstens einer Dentalrestauration (12), umfassend eine Ofenbasis (16) zum Lagern der Dentalrestauration (12) und einen Ofenkopf (18), wobei die Ofenbasis (16) und der Ofenkopf (18) mittels wenigstens eines Aktors (24) relativ zueinander beweglich sind, sowie eine Vorrichtung (26) zur Datenverarbeitung nach Anspruch 9, wobei die Vorrichtung (26) zur Datenverarbeitung steuerungstechnisch mit dem Aktor (24) gekoppelt ist.

13. Verfahren zum Vortrocknen wenigstens einer Dentalrestauration (12) mittels eines Ofens (10), wobei der Ofen (10) eine Ofenbasis (16) zum Lagern der Dentalrestauration (12) und einen Ofenkopf (18) umfasst, welcher wenigstens ein Heizelement (20) trägt, wobei der Ofen (10) beim Vortrocknen eine Schließposition (P) einnimmt, die mittels eines Verfahrens nach einem der Ansprüche 1 bis 8 ermittelt ist.

14. Verfahren nach Anspruch 13, ferner umfassend: Halten der Ofentemperatur auf der aktuellen Ofentemperatur (T) oder auf einer mittels der aktuellen Ofentemperatur (T) errechneten Temperatur.

15. Verfahren nach Anspruch 13 oder 14, ferner umfassend: Schließens des Ofens (10) mit Ablauf einer vorgegebenen Schließzeit.

16. Verwendung von Daten, die eine aktuelle Ofentemperatur (T) und/oder eine Dynamik der aktuellen Ofentemperatur (T) beschreiben, zum Bestimmen einer Schließposition (P) eines Ofens (10) beim Vortrocknen einer Dentalrestauration (12).
